(19) Europäisches Patentamt
European Patent Office
Office européen des brevets

(11) Veröffentlichungsnummer: **0 003 531**
**B1**

(12) # EUROPÄISCHE PATENTSCHRIFT

(21) Anmeldenummer: **79100215.7**

(22) Anmeldetag: **25.01.79**

(51) Int. Cl.³: **C 01 B 17/04,**
B 01 D 53/34, C 10 K 1/12

(54) **Verfahren zur Behandlung von Restgasen, die bei der Verbrennung von Schwefelwasserstoff zu elementarem Schwefel nach dem Claus-Verfahren anfallen**

(30) Priorität: **13.02.78 DE 2805992**

(43) Veröffentlichungstag der Anmeldung:
**22.08.79 Patentblatt 79/17**

(45) Bekanntmachung des Hinweises auf die Patenterteilung:
**01.10.80 Patentblatt 80/20**

(84) Benannte Vertragsstaaten:
**BE FR SE**

(56) Entgegenhaltungen:
**DE - A - 2 257 023**
**DE - A - 2 409 378**
**DE - B - 1 032 465**
**GB - A - 1 151 316**
**GB - A - 1 151 398**

(73) Patentinhaber: **Krupp-Koppers GmbH**
**Moltkestrasse 29**
**D - 4300 Essen 1 (DE)**

(72) Erfinder: **Nolden, Kurt**
**Burggrafenstrasse 46**
**D - 4300 Essen 1 (DE)**

**EP 0 003 531 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Behandlung von Restgasen, die bei der Verbrennung von Schwefelwasserstoff zu elementarem Schwefel nach dem Claus-Verfahren anfallen

Die Erfindung betrifft ein Verfahren zur Behandlung von Restgasen, die bei der Verbrennung von Schwefelwasserstoff zu elementarem Schwefel nach dem Claus-Verfahren anfallen, bei dem die Restgase zunächst mit einer wässerigen ammoniakalischen Lösung behandelt werden, die aus dem Koksofengas gewonnen wird, worauf dieselben dem rohen Koksofengas vor der Teerabscheidung zugemischt und zusammen mit diesem durch die Einrichtungen des Koksofengasreinigungsprozesses geschickt werden.

Es ist bekannt, den bei technischen Prozessen anfallenden Schwefelwasserstoff, insbesondere auch den Schwefelwasserstoff, der aus dem rohen Koksofengas ausgewaschen wird, mit Luft zu elementarem Schwefel nach der Bruttoformel

$$3\ H_2S + 1{,}5\ O_2 \rightarrow 3\ S + 3\ H_2O + 666\ kJ$$

zu verbrennen. Diese als Claus-Verfahren bezeichnete Umsetzung wird in sogen. Claus-Öfen ein- oder zweistufig durchgeführt. Bei dieser Umsetzung tritt jedoch aus dem Claus-Ofen ein Restgas aus, das neben Resten an elementarem Schwefel noch verhältnismässig grosse Mengen an nicht umgesetztem Schwefelwasserstoff, Schwefeldioxyd und anderen Schwefelverbindungen enthält, und das deshalb nicht ohne weiteres in die Atmosphäre abgelassen werden kann. Es ist deshalb vielfach üblich, diese Restgase einer Nachverbrennung zu unterwerfen, bei der der in ihnen vorhandene Schwefelwasserstoff und der elementare Schwefel zu Schwefeldioxyd verbrannt werden, welches über einen möglichst hohen Kamin in die Atmosphäre abgelassen wird. Die grosse Höhe des Kamins soll dabei dazu dienen, die Schwefeldioxydkonzentration in der umgebenden Atmosphäre soweit herabzusetzen, dass die diesbezüglichen behördlichen Auflagen erfüllt werden. Sowohl die Nachverbrennungsanlage als auch der Kamin verursachen jedoch zusätzliche Bauund Betriebskosten, die das Claus-Verfahren erheblich belasten.

In der DE—OS 22 57 023 ist deshalb unter anderem bereits ein Verfahren zur Behandlung derartiger Restgase vorgeschlagen worden, bei dem dieselben dem rohen Koksofengas vor der Teerabscheidung zugemischt und zusammen mit diesem durch die Einrichtungen des Koksofengasreinigungsprozesses geschickt werden. Dabei können die Restgase vor der Zumischung zum rohen Koksofengas auch noch mit einer wässerigen ammoniakalischen Lösung behandelt werden, die aus dem Koksofengas selbst gewonnen wird. Die als Waschflüssigkeit verwendete ammoniakalische Lösung wird anschliessend nach der Abtrennung von den Restgasen in den Ammoniakabtreiber eingeleitet und durch Behandlung mit Kalk oder Natronlauge zersetzt. Der genannten Offenlegungsschrift sind jedoch keine Angaben darüber zu entnehmen, an welcher Stelle des Koksofengasreinigungsprozesses die verwendete ammoniakalische Lösung abgezweigt wird. Obwohl diese Arbeitsweise im Prinzip einen gangbaren Weg zur Behandlung derartiger Restgase darstellt, so hat sich in der Praxis doch gezeigt, dass es hierbei leicht zu Schwefelablagerungen sowohl in der Zuführungsleitung für das Restgas als auch in der Leitung für das rohe Koksofengas kommen kann. Es liegt aber auf der Hand, dass diese Schwefelablagerungen leicht zu Verstopfungen in den genannten Leitungen und damit zu Betriebsstörungen der gesamten Anlage führen können.

Der Erfindung lag deshalb die Aufgabe zugrunde, diese Arbeitsweise dahingehend zu verbessern, dass die vorstehend beschriebenen Nachteile weitgehend vermieden werden.

Dies wird bei einem Verfahren der eingangs beschriebenen Art erfindungsgemäss dadurch erreicht, dass man als Waschflüssigkeit für die Restgase eine Teilmenge des Kondensates verwendet, welches vom Spülwasserabscheider als Spülflüssigkeit zur Vorlage der Koksofenbatterie zurückgeführt wird, wobei die Restgase und die Waschflüssigkeit zusammen dem rohen Koksofengas zugemischt werden und die Zufuhr der Restgase zum Gaswascher über eine beheizte Leitung erfolgt, in der die Restgastemperatur oberhalb des Schwefelschmelzpunktes gehalten wird.

Dabei hat es sich als besonders vorteilhaft erwiesen, wenn die Restgastemperatur in der beheizten Leitung auf etwa 130°C gehalten wird.

Für den einwandfreien Betrieb des Gaswaschers genügt es in der Regel, wenn auf ihn etwa 2 bis 10% der Kondensatmenge aufgegeben werden, die vom Spülwasserabscheider als Spülflüssigkeit zur Vorlage der Koksofenbatterie zurückgeführt wird.

Weitere Einzelheiten der Erfindung sollen nachfolgend an Hand der Abbildungen erläutert werden. Es zeigen:

Fig. 1 ein Fliessschema des erfindungsgemässen Verfahrens, und

Fig. 2 einen hierfür besonders geeigneten Gaswascher.

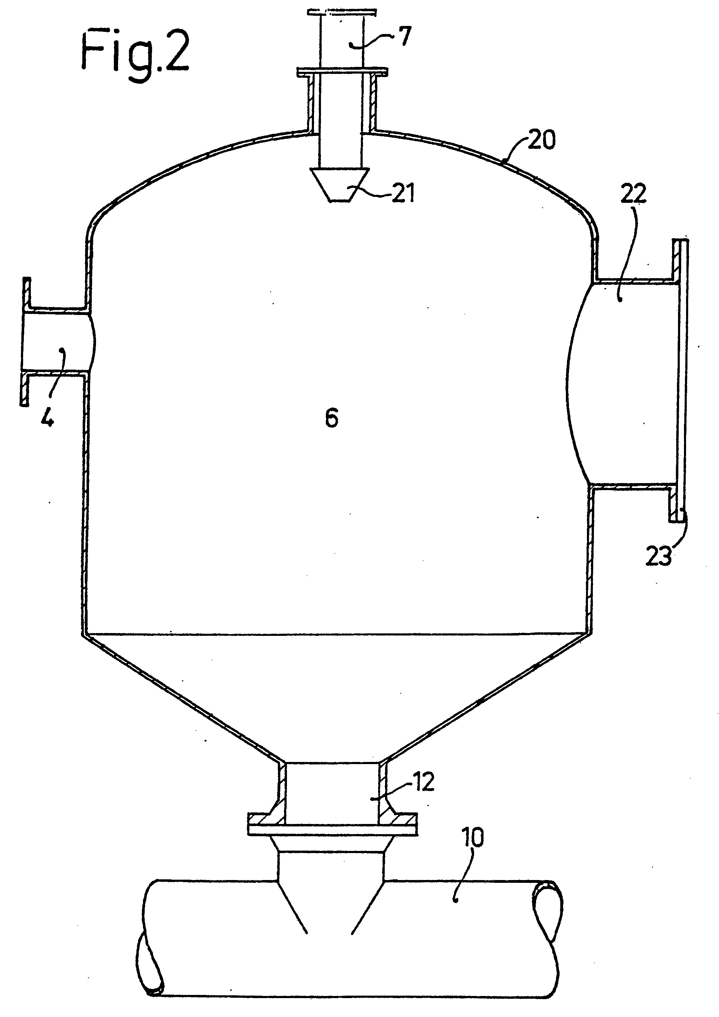

In dem Fliessschema in Fig. 1 sind die wesentlichen Schritte des erfindungsgemässen Verfahrens in einem Blockschaltbild dargestellt. Das aus dem Claus-Ofen 1 austretende Restgas gelangt dabei über die Leitung 2 und den Schwefelabscheider 3 in die Leitung 4, die von einer Heizeinrichtung 5 umgeben ist. Hierbei kann es sich um eine Heizeinrichtung üblicher Bauart handeln, wie z.B. eine elektrische Heizspirale oder ein in einem Mantelrohr strömendes Heizmedium. Die Heizleistung der Heizeinrichtung 5 wird so eingestellt, dass das

in der Leitung 4 strömende Restgas auf einer Temperatur oberhalb des Schwefelschmelzpunktes, vorzugsweise auf etwa 130°C, gehalten wird und mit dieser Temperatur in den Gaswascher 6 eintritt. Eine bevorzugte Ausführungsform des Gaswaschers 6 ist in Fig. 2 dargestellt und wird daher weiter unten erläutert. Es ist aber natürlich auch möglich, dass hier eine andere Gaswascherkonstruktion zur Anwendung gelangt als die in Fig. 2 dargestellte Ausführungsform. Auf den Gaswascher 6 wird über die Leitung 7 ein Teilstrom des Kondensates aufgegeben das durch die Leitung 16 vom Spülwasserabscheider 11 als spülflüssigkeit zur Vorlage 9 der Koksofenbatterie 8 zurückgeführt wird. Die Menge des über die Leitung 7 abgezogenen Kondensates richtet sich natürlich nach der jeweiligen Zusammensetzung des Restgases. In der Regel genügt es jedoch, wenn etwa 2—10% der durch die Leitung 16 fliessenden Flüssigkeitsmenge abgezweigt werden. Die auf den Gaswascher 6 aufgegebene Spülflüssigkeit und das Restgas durchströmen diesen von oben nach unten und treten gemeinsam aus dem Unterteil des Gaswaschers 6 aus. Über das möglichst kurze Rohrstück 12 gelangen sie danach unmittelbar in die Leitung 10, in der sie mit dem rohen Koksofengas vereinigt werden, welches von der Koksofenbatterie 8 über das Steigrohr 19 in die Vorlage 9 gelangt und von dort durch die Leitung 10 zum Spülwasserabscheider 11 strömt. Bei diesem handelt es sich um einen Abscheider üblicher Bauart, wie er in der Kokereitechnik normalerweise eingesetzt wird. Die aus dem Gaswascher 6 ablaufende Spülflüssigkeit enthält den aus dem Restgas auskondensierten Restschwefel. Im Spülwasserabscheider 11 wird diese Spülflüssigkeit von dem aus dem rohen Koksofengas abgeschiedenen Dickteer durch Dekantieren abgetrennt. Dabei reichert sich der Schwefel im kondensierten Dickteer an und kann mit diesem durch die Leitung 18 abgezogen und nach den bekannten Methoden der Kokereitechnik weiterbehandelt werden.

Das im wesentlichen nur noch Schwefelwasserstoff enthaltende Restgas gelangt währenddessen zusammen mit dem rohen Koksofengas über die Leitung 13 in den Gaskühler 14 und wird daran anschliessend über die Leitung 15 zusammen mit dem Koksofengas den bekannten Einrichtungen des Koksofengasbehandlungsprozesses zugeführt. Da diese weitere Gasbehandlung nicht mehr Gegenstand der vorliegenden Erfindung ist, braucht hierauf nicht näher eingegangen zu werden.

Aus dem Gaskühler 14, der selbstverständlich auch mehrstufig ausgebildet sein kann, gelangt das sich dort abscheidende Kondensat über die Leitung 17 in den Spülwasserabscheider 11, wo es mit der aus dem Gaswascher 6 ablaufenden Spülflüssigkeit vereinigt wird. Die vereinigte wässerige Phase, von der der Dickteer abgetrennt worden ist, kann durch die Leitung 16 aus dem Spülwasserabscheider 11 abgezogen und als Spülflüssigkeit erneut auf die Vorlage 9 aufgegeben werden.

Das vorstehend beschriebene Verfahrensschema zeigt selbstverständlich nur die prinzipielle Ausgestaltung des erfindungsgemässen Verfahrens und lässt alle Nebeneinrichtungen, die zwischen den einzelnen Behandlungsstufen angeordnet sein können, ausser Betracht. Ebenso lässt das Blockschaltbild in Fig. 1 keine Rückschlüsse bezüglich der tatsächlichen Grösse und Lage der beschriebenen Einrichtungen zu.

Der in Fig. 2 dargestellte Gaswascher 6, der zur Durchführung des erfindungsgemässen Verfahrens besonders geeignet ist, stellt eine verhältnismässig einfache Konstruktion dar. Dieser Gaswascher besteht aus dem Gehäuse 20, in welches seitlich die Leitung 4 mündet, durch die das Restgas eintritt. Im Oberteil des Gehäuses 20 ist die Verteilerdüse 21 angeordnet, durch die die über die Leitung 7 zugeführte Flüssigkeitsmenge aufgegeben wird. Falls es zum Zwecke einer besseren Flüssigkeitsverteilung angebracht ist, kann der Flüssigkeitsaustritt aus de Leitung 7 natürlich auch über mehrere Verteilerdüsen, die beispielsweise in einem Düsenring angeordnet sind, oder eine andere geeignete Verteilereinrichtung erfolgen. Im mittleren und unteren Teil des Gehäuses 20 sind jedoch keine weiteren Verteilereinrichtungen oder Einbauten vorgesehen, damit die Gefahr von Schwefelablagerungen vermieden wird. In seinem unteren Teil weist das Gehäuse 20, das vorzugsweise einen runden Querschnitt besitzt, eine konische Verjüngung auf, die in das kurze Rohrstück 12 übergeht, welches unmittelbar in die Leitung 10 für das rohe Koksofengas mündet. Auf der der Leitung 4 gegenüber liegenden Seite kann das Gehäuse 20 mit dem Mannloch 22 versehen sein, das normalerweise durch den Deckel 23 verschlossen ist. Bei Anwendung der vorstehend beschriebenen Konstruktion gelangt zusammen mit dem Restgas der im Gaswascher aus dem Restgas abgeschiedene und in der Spülflüssigkeit suspendierte Schwefel automatisch in die Leitung 10, aus der der Schwefel in den Spülwasserabscheider 11 gespült wird. Bei der beschriebenen Konstruktion wird deshalb die Gefahr von Schwefelablagerungen weitestgehend vermieden, und sie besitzt deshalb eine ausserordentlich geringe Störanfälligkeit. Wegen seiner einfachen Bauweise ist der beschriebene Gaswascher zudem auch sehr kostengünstig zu erstellen.

**Patentansprüche**

1. Verfahren zur Behandlung von Restgasen, die bei der Verbrennung von Schwefelwasserstoff zu elementarem Schwefel nach dem Claus-Verfahren anfallen, bei dem die Restgase zunächst mit einer wässerigen ammoniakalischen Lösung behandelt werden, die aus dem Koksofengas gewonnen wird, worauf

dieselben dem rohen Koksofengas vor der Teerabscheidung zugemischt und zusammen mit diesem durch die Einrichtungen des Koksofengasreinigungsprozesses geschickt werden, dadurch gekennzeichnet, dass man als Waschflüssigkeit für die Restgase eine Teilmenge des Kondensates verwendet, welches vom Spülwasserabscheider als Spülflüssigkeit zur Vorlage der Koksofenbatterie zurückgeführt wird, wobei die Restgase und die Waschflüssigkeit zusammen dem rohen Koksofengas zugemischt werden und die Zufuhr der Restgase zum Gaswascher über eine beheizte Leitung erfolgt, in der die Restgastemperatur oberhalb des Schwefelschmelzpunktes gehalten wird.

2. Verfahren nach Anspruch 1, dadurch gekennzeichnet, dass die Restgastemperatur in der beheizten Leitung auf etwa 130°C gehalten wird.

3. Verfahren nach den Ansprüchen 1 und 2, dadurch gekennzeichnet, dass auf den Gaswascher etwa 2 bis 10% der Kondensatmenge aufgegeben werden, die vom Spülwasserabscheider als Spülflüssigkeit zur Vorlage der Koksofenbatterie zurückgeführt wird.

4. Verfahren na den Ansprüchen 1 bis 3, dadurch gekennzeichnet, dass die Behandlung des Restgases in einem Gaswascher erfolgt, der in seinem mittleren und unteren Teil frei von Einbauten ist und der vom Gas und von der Flüssigkeit im Gleichstrom von oben nach unten durchflossen wird.

5. Verfahren nach den Ansprüchen 1 bis 4, dadurch gekennzeichnet, dass der Gaswascher unmittelbar über der Leitung für das rohe Koksofengas angeordnet ist.

**Claims**

1. Process for treating residual gases which are produced when hydrogen sulfide is incinerated to elementary sulfur by the Claus process, wherein said gases are washed with an aqueous ammoniacal solution which is separated from the coke oven gas, whereupon the residual gases are added to the raw coke oven gas prior to the tar separation and conducted, along with the raw coke oven gas, through the coke oven gas purification process equipment, characterised in that a part of the condensate (flushing liquor) which flows back from the flushing liquor separator to the gas collecting main of the coke oven battery, is used as washing liquor for the residual gases, wherein the residual gases and the washing liquor are added together to the raw coke oven gases, and the residual gases are supplied to the gas scrubber in a heated pipeline in which the temperature of the gas is maintained above the melting point of sulfur.

2. Process as claimed in claim 1, characterised in that the temperature of the residual gases in the heated pipeline is maintained at about 130°C.

3. Process as claimed in claims 1 and 2, characterised in that about 2 to 10 per cent of the condensate (flushing liquor), which flows back from the flushing liquor separator to the gas collecting main of the coke oven battery, are conducted to the gas scrubber.

4. Process as claimed in claims 1 to 3, characterised in that the residual gases are treated in a gas scrubber, central and lower parts of which are vacant and concurrently passed from the top to the bottom by the residual gases and the washing liquor.

5. Process as claimed in claims 1 to 4, characterised in that the gas scrubber is positioned above and directly adjacent to the pipeline for the raw coke oven gas.

**Revendications**

1. Procédé de traitement de gaz résiduaires obtenus lors de la combustion d l'hydrogène sulfuré avec formation de soufre élémentaire par le procédé Claus et dans lequel on commence par traiter les gaz résiduaires par une solution ammoniacale aqueuse tirée due gaz de four à coke, après quoi on les mélange au gaz brut de four à coke avant la séparation du goudron et on les fait passer, en même temps que ce gaz, à travers les appareils d'épuration du gaz de four à coke, procédé caractérisé par le fait que l'on utilise, comme liquide de lavage des gaz résiduaires, une partie du condensat qui est ramené du séparateur d'eau de lavage, en tant que liquide de lavage, au collecteur de la batterie de fours à coke, les gaz résiduaires et le liquide de lavage étant mélangés ensemble au gaz brut de cokerie et l'amenée des gaz résiduaires au laveur de gaz s'effectuant par un tuyau chauffé dans lequel la température des gaz résiduaires est maintenue au-dessus du point de fusion du soufre.

2. Procédé selon la revendication 1, caractérisé par le fait que l'on maintient la température des gaz résiduaires, dans le tuyau chauffé, à environ 130°C.

3. Procédé selon les revendications 1 et 2, caractérisé par le fait que l'on applique au laveur de gaz environ 2 à 10% de la quantité de condensat ramenée due séparateur d'eau de lavage, en tant que liquide de lavage, au collecteur de la batterie de fours à coke.

4. Procédé selon les revendications 1 à 3, caractérisé par le fait que le traitement du gaz résiduaire s'effectue dans un laveur de gaz qui est exempt d'agencements intérieurs dans sa partie centrale et inférieure et qui est parcouru de haut en bas, à courant direct, par le gaz et par le liquide.

5. Procédé selon les revendications 1 à 4, caractérisé par le fait que le laveur de gaz est disposé immédiatement au-dessus du tuyau destiné au gaz brut de four à coke.

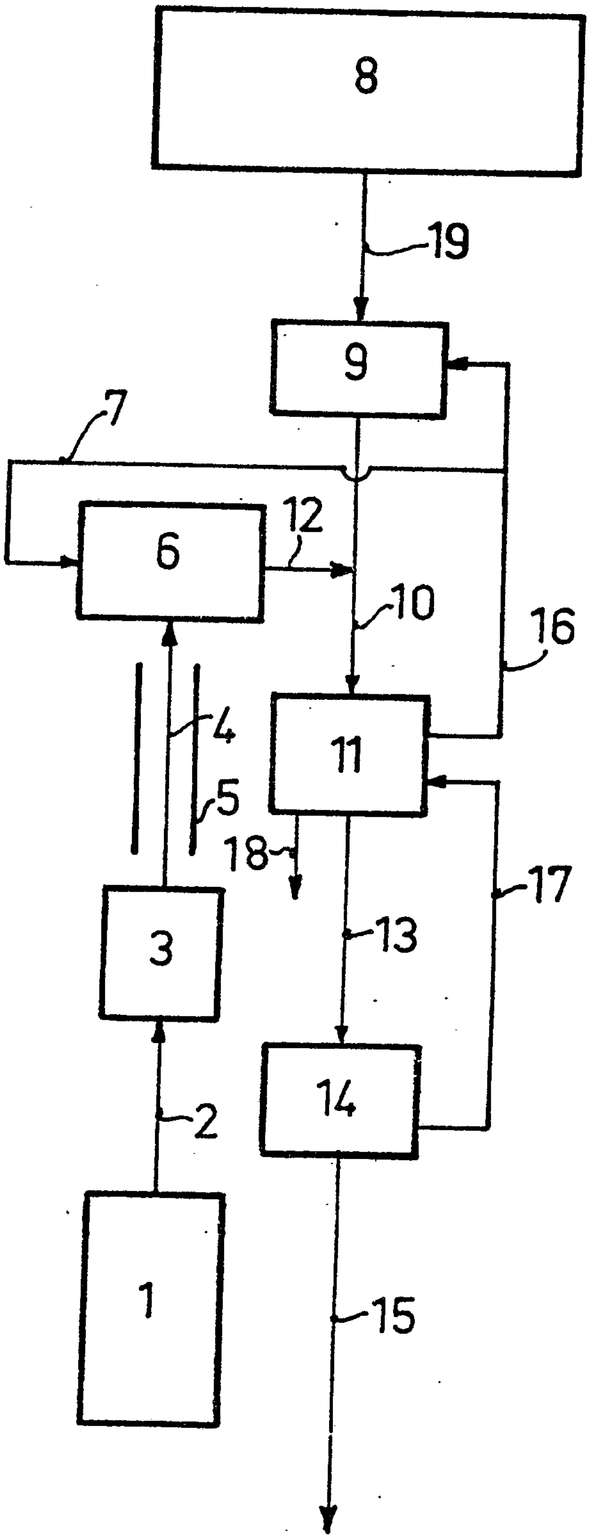


Fig.1

Fig.2